(19)

Europäisches Patentamt
European Patent Office
Office européen des brevets

(11) **EP 1 777 545 A1**

(12) **EUROPEAN PATENT APPLICATION**

(43) Date of publication:
**25.04.2007 Bulletin 2007/17**

(51) Int Cl.:
**G01S 13/10** (2006.01)

(21) Application number: **05256583.5**

(22) Date of filing: **24.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicants:
• **Mitsubishi Electric Information Technology Centre**
**Europe B.V.**
**Guildford,**
**Surrey GU2 7YD (GB)**
Designated Contracting States:
**GB**
• **MITSUBISHI DENKI KABUSHIKI KAISHA**
**Chiyoda-ku**
**Tokyo 100-8310 (JP)**
Designated Contracting States:
**AT BE BG CH CY CZ DE DK EE ES FI FR GR HU IE IS IT LI LT LU LV MC NL PL PT RO SE SI SK TR**

(72) Inventor: **Szajnowski, Wieslaw Jerzy**
**Guildford**
**Surrey GU1 2AR (GB)**

(74) Representative: **Burke, Steven David et al**
**R.G.C. Jenkins & Co.**
**26 Caxton Street**
**London SW1H 0RJ (GB)**

(54) **Object detection**

(57)    An object is detected by generating a binary signal having an irregular sequence of states and in which transitions between states occur at varying time offsets with respect to a nominal regular clock. The binary signal is transmitted, and a reflection of the transmitted signal is processed with a reference version of the binary signal. The reference signal is delayed, and then used to sample the reflected signal. The samples are used to derive a combined value representing the average time derivative of the reflected signal at locations within the reflected signal which substantially correspond to the times of the transitions in the reference signal. The presence of an object at a range corresponding to the delay is determined from the combined value.

*Fig. 25*

**Description**

## BACKGROUND OF THE INVENTION

Field of the Invention

This invention relates to a method and apparatus for object detection. The invention is especially, but not exclusively, applicable to generating binary waveforms which are optimised for high-resolution ranging applications, for example for estimating the distance to obstacles in automotive spread-spectrum systems utilizing random or pseudorandom binary waveforms.

Description of the Prior Art

One important type of automotive obstacle-detection system employs a continuous microwave carrier suitably modulated by a *synchronous binary* (random or pseudorandom) *waveform.* The shape of the spectrum, including its spread, of the resulting transmitted signal will depend on the characteristics of the modulating binary waveform. A decision regarding the presence or absence of an obstacle at a predetermined range is based on the result of jointly processing a transmitted signal and signals reflected back by various objects present in the field of view of the system.

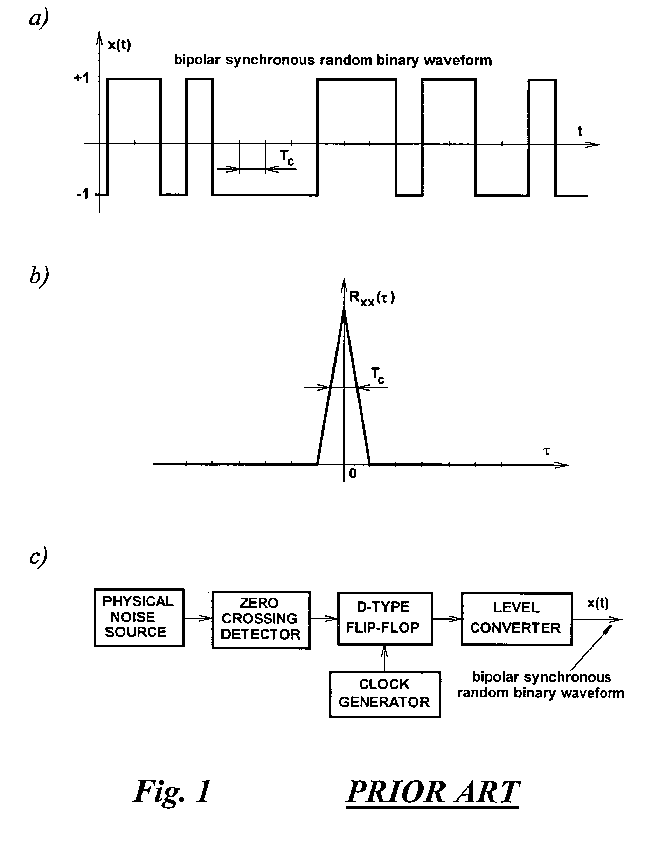

When a continuous synchronous binary waveform is employed for ranging, the optimal shape of its autocorrelation function will have a triangular form with the 'half-height' duration equal to the period $T_c$ of a clock employed by a circuit producing the waveform. Fig. 1a illustrates schematically a synchronous random binary waveform x(t), and Fig. 1b depicts the shape of the autocorrelation function $R_{xx}(\tau)$ optimal for ranging applications. Such shape of the (theoretical) autocorrelation function characterizes purely random synchronous binary waveforms.

Fig. 1c is a block diagram of a conventional circuit used to generate a bipolar synchronous random binary waveform. The circuit comprises a wideband physical noise source driving a zero-crossing detector, a D-type flip-flop followed by a voltage level converter and a clock generator. The characteristics of the noise source are so chosen as to obtain statistically independent (or, at least, substantially uncorrelated) random noise samples at the time instants determined by the clock generator.

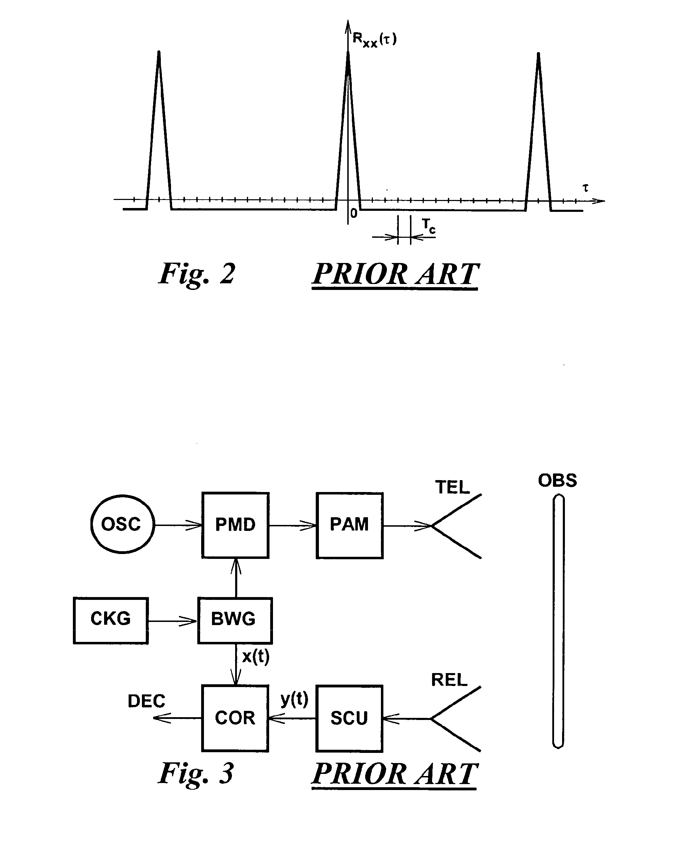

A broad class of useful synchronous binary waveforms can be obtained from pseudorandom binary sequences, as is well known to those skilled in the art. Fig. 2 shows an example of the autocorrelation function $R_{xx}(\tau)$ of a periodic bipolar pseudorandom binary waveform x(t). As seen, the autocorrelation function is also periodic and it assumes a negative, rather than zero, value outside the periodic triangular peaks. From the prior art, it is also known that this residual negative value can be reduced to a negligible level by utilizing 'long' pseudorandom binary sequences. Accordingly, the autocorrelation function of a suitably selected pseudorandom binary waveform, observed over a single period, can adequately approximate the form of the autocorrelation function characterizing a purely random synchronous binary waveform.

In a multi-user environment, many similar obstacle-detection systems will operate in the same region sharing the same frequency band. Consequently, to avoid mutual interference, each system should use a distinct signal, preferably orthogonal to the signals employed by all other systems. Because the number and type of systems sharing the same frequency band is unknown, it is extremely difficult (or inconvenient, at best) to assign a distinct pseudorandom binary sequence to each system. Therefore, in a multi-user environment, the use of purely random or aperiodic chaotic binary waveforms may be preferable. Furthermore, because purely random binary waveforms exhibit maximum unpredictability, they are also less vulnerable to intercept and intelligent jamming.

Fig. 3 is a block diagram of a conventional obstacle-detection system utilizing a continuous microwave carrier, phase-modulated by a synchronous binary waveform. The system comprises a generator BWG that produces a synchronous binary waveform that may assume at each time instant only one of two values: +1 or -1; the waveform may switch to the alternate state at the time instants determined by a clock generator CKG producing clock pulses with period $T_c$. The system also has an oscillator OSC that generates a sinusoidal signal with required carrier frequency, a phase modulator PMD that modulates the phase of the carrier signal in a binary $0/\Pi$ fashion, a power amplifier PAM that amplifies the phase-modulated carrier signal to a required level, a transmit element TEL that radiates an electromagnetic wave representing the modulated carrier signal towards an obstacle OBS, a suitable receive sensor REL that receives an electromagnetic wave reflected back by the obstacle OBS, a signal conditioning unit SCU that amplifies and pre-processes the signal provided by the receive sensor REL and a correlator COR that processes jointly a transmitted (reference) binary waveform x(t) produced by the generator BWG and a received waveform y(t) supplied by the signal conditioning unit SCU to provide a decision DEC regarding the presence or absence of an obstacle at a predetermined range.

For the purpose of distance determination, a time-delay estimate is obtained from the reference waveform x(t) and a received signal y(t) of the form

$$y(t) = \alpha x(t - \Delta t) + n(t)$$

where x(t) is a transmitted waveform, $\alpha$ denotes attenuation, $\Delta t$ is the time delay, and n(t) represents background noise and other interference. The distance L to the obstacle is then determined from L = c ($\Delta$t/2), where c is the speed of light.

The value of the time delay $\Delta$t is usually determined by cross-correlating the two signals x(t) and y(t), i.e. by performing the operation

$$R_{xy}(\tau) = \frac{1}{T} \int_0^{-T} x(t - \tau) \, y(t) \, dt$$

where the integral is evaluated over the observation interval of duration T and for a range, $\tau_{min} < \tau < \tau_{max}$, of hypothesised time delays $\tau$. The value of argument $\tau$, say $\tau_0$, that maximises the cross-correlation function $R_{xy}(\tau)$ provides an estimate of the unknown time delay $\Delta$t.

In general, the operation of cross-correlation comprises the following steps:

1. selecting a value $\tau$ from the range $\tau_{min} < \tau < \tau_{max}$ of delays of interest;
2. delaying the reference signal x(t) by this value;
3. multiplying the values of a received signal y(t) and those of the delayed reference x(t-$\tau$);
4. integrating the product values obtained in step 3 over a specified observation time interval T.

The above procedure is repeated for all delay values $\tau$ of interest from the range $\tau_{min} < \tau < \tau_{max}$.

In practice, prior to cross-correlation, the received signal y(t) may be suitably pre-filtered to accentuate frequencies for which the signal-to-noise ratio (SNR) is highest and to attenuate background noise, thus increasing the resulting overall SNR. A cross-correlator utilizing signal pre-filtering is known in the prior art as a *generalized cross-correlator.*

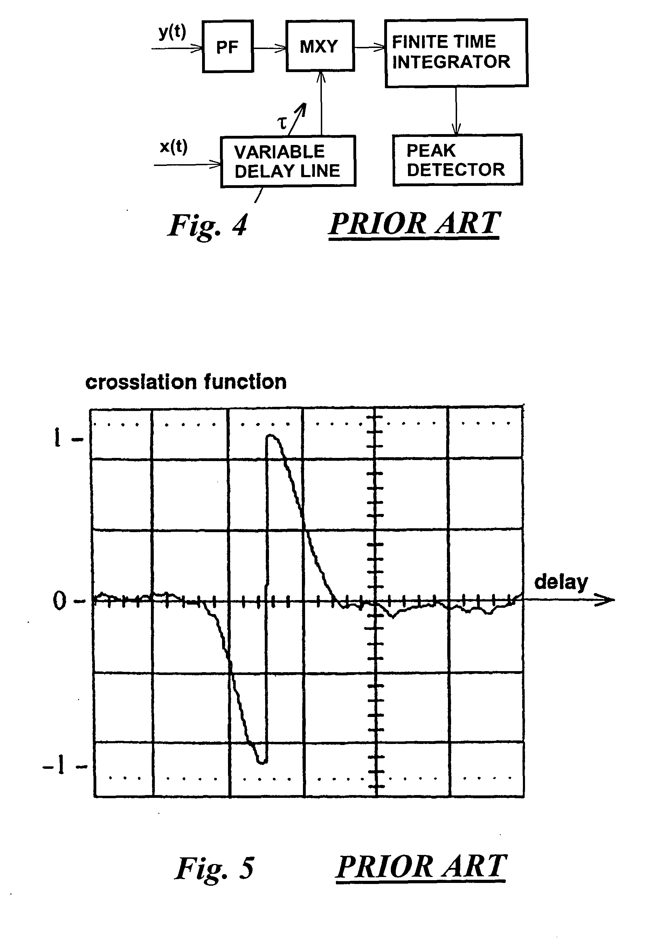

A block diagram of a conventional cross-correlator system is presented in Fig. 4. The system comprises a pre-filter PF, a multiplier MXY, a variable delay line, a finite-time integrator and a peak detector. The system performs operations required to determine a value of cross-correlation for each selected time delay $\tau$.

The cross-correlation process, including pre-filtering, can also be implemented digitally, if sufficient sampling and quantising of the signals is used.

In the prior art, the correlator system shown in Fig. 4 is referred to as a *serial correlator* in contrast to a parallel (or multi-channel) configuration in which values of correlation are determined concurrently for different values of delay $\tau$.

U.S. Patent No. 6,539,320 discloses an alternative method for determining the delay between a primary reference signal and its time-delayed replica. In the following, the disclosed method will be referred to as *crosslation,* and a system implementing the method will be referred to as a *crosslator.* The contents of U.S. Patent No. 6,539,320 are incorporated herein by reference. A crosslation technique involves using events (such as zero crossings) from one signal to sample the other signal. The events occur at irregular intervals, and are preferably at least substantially aperiodic. The samples are combined to derive a value which represents the extent to which the sampling coincides with features of the second signal corresponding to the events. By repeating this process for different delays between the first and second signals, it is possible to find the delay which gives rise to the value representing the greatest coincidence of events, i.e. the delay between the two signals.

According to the above disclosure, a binary bipolar signal x(t) is subjected to an unknown delay to produce a signal y(t), and a reference version of the signal x(t) is examined to determine the time instants at which its level crosses zero, either with a positive slope (an *upcrossing)* or with a negative slope (a *downcrossing*). The time instants of these crossing events are used to obtain respective segments of the signal y(t), the segments having a predetermined duration. The segments corresponding to zero upcrossings are all summed, and the segments corresponding to zero downcrossings are all subtracted from the resulting sum. A representation of such segment combination is then examined to locate a feature in the form of an S-shaped odd function of time delay. In the following, this S-shaped function will be referred to as the *crosslation* function.

The position within the representation of a zero-crossing in the centre of the crosslation function represents the amount of the mutual delay between the two signals being processed. Fig. 5 shows an example of an S-shaped crosslation function obtained experimentally by processing jointly a random binary waveform and its time-delayed replica.

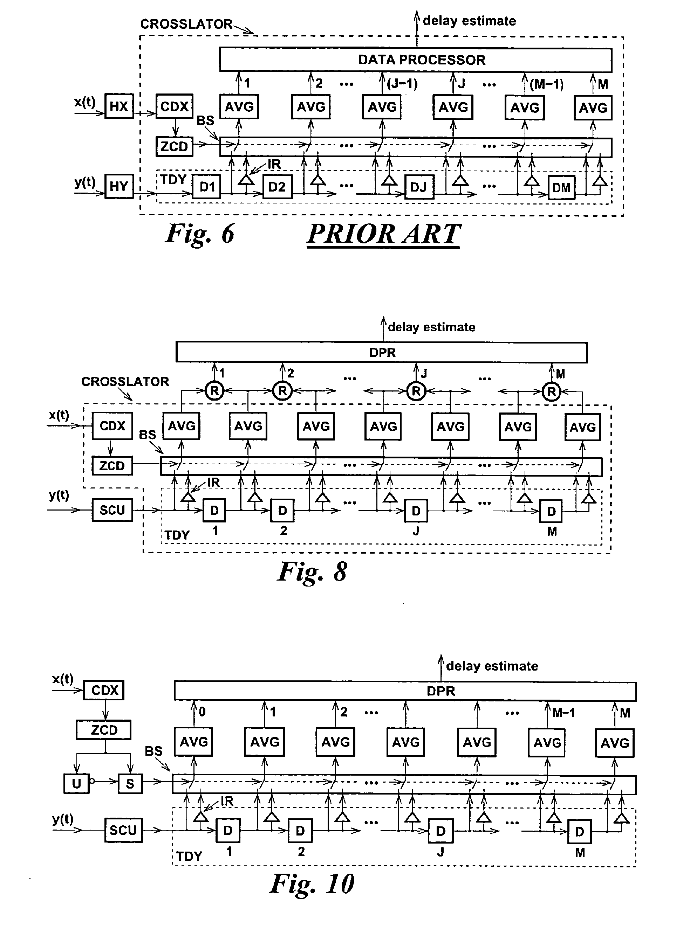

Fig. 6 shows one possible crosslation system capable of determining the delay between a signal x(t) and its time-delayed replica. The signal y(t) is the sum of noise n(t) and the signal x(t) attenuated by the factor of $\alpha$ and delayed by $\Delta$t.

The signal y(t) is converted by a hard limiter HY into a corresponding bipolar binary waveform which is applied to the input of a tapped delay line TDY; the TDY comprises a cascade of M identical unit-delay cells D1, D2, ... , DJ, ... , DM. Each cell provides a suitably delayed output signal and also its polarity-reversed replica supplied by inverter IR.

The parallel outputs of the tapped delay line TDY are connected through a bank of switches BS to M averaging or integrating units AVG that accumulate data supplied by the tapped delay line TDY. The switches, normally open, are closed when a suitable signal is applied to their common control input. The time interval during which the switches are closed should be sufficiently long so that each new incremental signal sample can be acquired with minimal loss.

The time instants, at which the switches are closed and new data supplied to the averaging units, are determined by a zero-crossing detector ZCD that detects the crossings of zero level of a binary waveform obtained from the reference signal x(t) processed by a hard limiter HX; the resulting binary waveform is then delayed by a constant-delay line CDX. The value of the constant delay introduced by the CDX is equal to or greater than the expected maximum value of time delay to be determined. It should be pointed out that the averaging units receive the incremental input values from the tapped delay line TDY in a nonuniform manner, at the time instants coinciding with zero crossings of the delayed reference signal x(t).

Each time a zero upcrossing occurs, there appears transiently at the inputs of the averaging units a replica of a respective segment of the binary waveform obtained from the signal y(t). Similarly, each time a zero downcrossing occurs, there appears transiently at the inputs of the averaging units a *reversed-polarity* replica of a respective segment of the binary waveform obtained from the signal y(t). The averaging units thus combine the two groups of these segments to produce a representation of a combined waveform, like that of Fig. 5, which has an arbitrary time scale along the x-axis and which indicates on the y-axis units corresponding to the amplitude of the binary waveform from hard limiter HY.

The signals obtained at the outputs of the averaging units AVG are used by the data processor. The operations performed by the data processor are so defined and structured as to determine the location of the zero crossing situated between the two opposite-polarity main peaks exhibited by the resulting S-shaped crosslation function. The location of this zero crossing corresponds to the time delay between the signals x(t) and y(t). A set of suitable operations and their sequence can be constructed by anyone skilled in the art.

In some applications, in order to simplify the structure of a crosslator system, instead of using both upcrossings and downcrossings, the reference version of a wideband non-deterministic signal x(t) may be examined to determine the time instants of zero upcrossings (or downcrossings) only. However, irrespective of the particular arrangement used, a crosslation-based technique always includes a step of determining the time instants at which a reference signal crosses a predetermined threshold. Those specific time instants are also referred to as *significant events.* In a hardware implementation of crosslation, significant events define the time instants at which suitable trigger pulses are generated.

The crosslation techniques of U.S. Patent No. 6,539,320 for time-delay determination are robust and relatively easy to implement in hardware. However, it has been proposed (see co-pending European Patent Application No. 04252785.3, filed 13 May 2004, corresponding to US Patent Application Serial No. 11/127271, filed 12 May 2005, referred to herein as "the first earlier application") to provide a system which is better suited to applications in which the obstacle-detection system should provide high-resolution capability for distinguishing closely spaced multiple obstacles.

The first earlier application discloses a method according to which, for the purpose of time-delay measurement, the crosslation function is first converted into a unipolar impulse-like function. In the following, this function will be referred to as *differential crosslation* function.

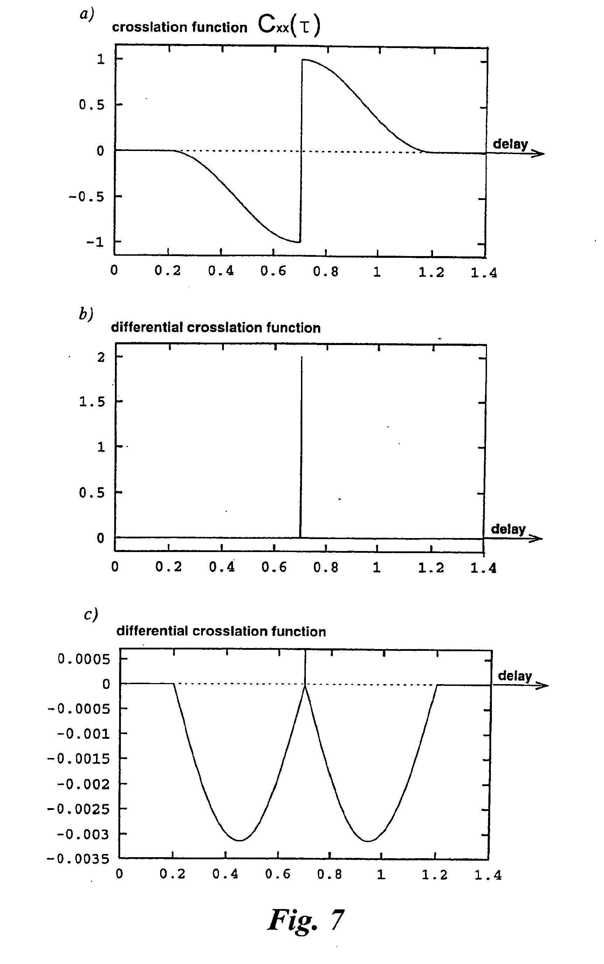

The mechanism devised for obtaining the differential crosslation function will be explained in more detail with reference to Fig. 7. Each of Figs. 7a to 7c is a chart with arbitrary time units along the x-axis and amplitude units along the y-axis.

An example of a theoretical crosslation function is shown in Fig. 7a. This particular shape characterises a bipolar random binary waveform obtained from zero crossings of Gaussian noise with a low-pass frequency spectrum of a Gaussian shape.

The properties of the crosslation function characterizing random binary waveforms are discussed in more detail in: W. J. Szajnowski and P. A. Ratliff, Implicit Averaging and Delay Determination of Random Binary Waveforms. IEEE Signal Processing Letters. 9, 193-195 (2002), the contents of which are incorporated herein by reference.

As shown in the above publication, in the case of an ideal random binary waveform with zero switching times between the two levels, the crosslation function has always a positive *step* appearing at the delay instant, irrespective of the characteristics of the binary waveform. Therefore, the *derivative* of the crosslation function will always have a dominant component in the form of the Dirac *delta function.* In practical implementations, the time derivative may conveniently be substituted by a difference between a crosslation function and its replica suitably shifted in time.

Fig. 7b and Fig. 7c show (to different scales) the differential crosslation function, being the difference between the crosslation function of Fig. 7a and its replica shifted by 0.001 of the time unit. As seen, the peak of the differential crosslation function, corresponding to the unknown delay, is equal to 2, and the magnitude of the off-peak *negative* sidelobes (shown in detail in Fig. 7c) does not exceed the value of 0.0032. Therefore, in this case, the peak-to-sidelobe ratio is greater than 625. The value of this ratio tends to infinity as the delay used for the determining differential crosslation approaches zero.

Accordingly, the unknown time delay can be determined in a more convenient and precise manner by first performing on the primary crosslation function an operation substantially equivalent to calculating the derivative, with respect to relative time delay, of that function.

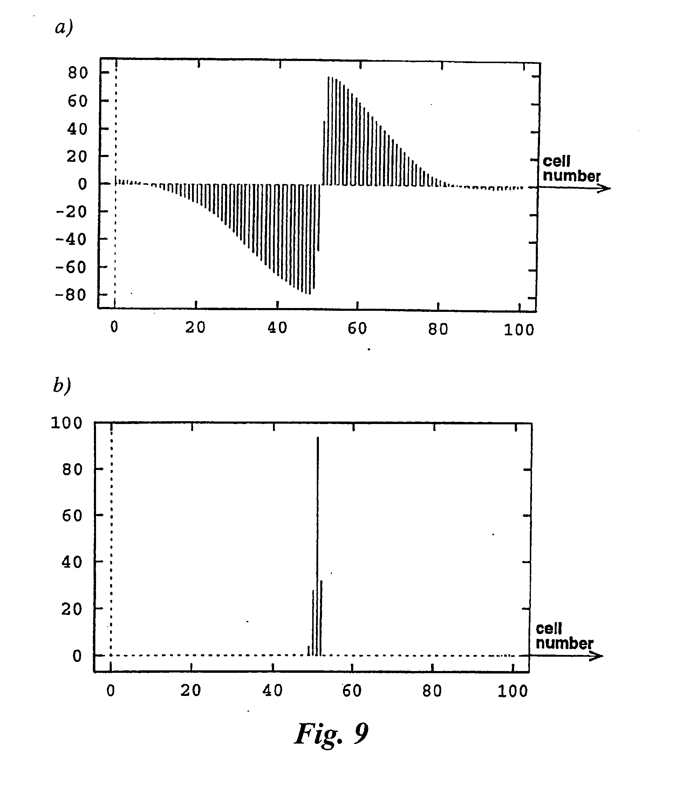

Fig. 8 is a block diagram of a variant of a differential crosslator, disclosed in the first earlier application, capable of determining the delay between two signals. The differential crosslator comprises a signal conditioning unit SCU, a crosslator, an array of identical difference circuits R, and a data processor DPR supplying an estimate of an unknown time delay.

The crosslator comprises a cascade TDY of M unit-delay cells D, a bank of switches BS, (M+1) identical averaging (or integrating) circuits AVG, a constant delay CDX, and a zero-crossing detector ZCD. A delay cell D with index k, where k = 1, 2, ... , M, can supply both a delayed signal y(t-kD) and its polarity-reversed replica -y(t-kD), where D denotes a unit-delay value.

As seen, in this configuration, although the system employs M difference circuits and M unit-delay cells, the number of averaging circuits AVG is equal to (M+1). Because each difference circuit R operates on the outputs of two adjacent averaging circuits AVG, an impulse will appear at a location along the array of difference circuits R corresponding to the unknown delay. Accordingly, the index of the location at which the impulse occurs will determine uniquely the value of unknown time delay Δt.

In the presence of noise and other interference, and also due to finite switching times in physical circuitry, the crosslation function will always exhibit a non-zero transition region rather than a steep step in the centre. Accordingly, the main peak of the resulting differential crosslation function will differ from a single impulse and may even appear at the outputs of a few adjacent difference circuits. This effect is illustrated in Fig. 9, which depicts some selected experimental results.

Fig. 9a is an example of a discrete representation of an empirical crosslation function, and Fig. 9b shows the differential crosslation function obtained as the difference between the two replicas of the empirical crosslation function shifted by a unit step (a single cell). As seen, in addition to a dominant main peak there are also some positive sidelobes on both sides. However, the location of the main peak can always be determined by applying a suitable decision threshold to difference values.

The values produced by the array of difference circuits R are supplied to the data processor DPR that determines the location of the impulse along the array to calculate the value of time delay of interest. The location of the impulse centre can be determined from the peak value, the 'centre of gravity' or the median of the impulse. Operations required to perform such tasks can be implemented by anyone skilled in the art.

The first earlier application also discloses a system in which the differential crosslation function can be obtained through the use of an auxiliary circuit following a zero-crossing detector, yet without the use of any explicit difference circuits.

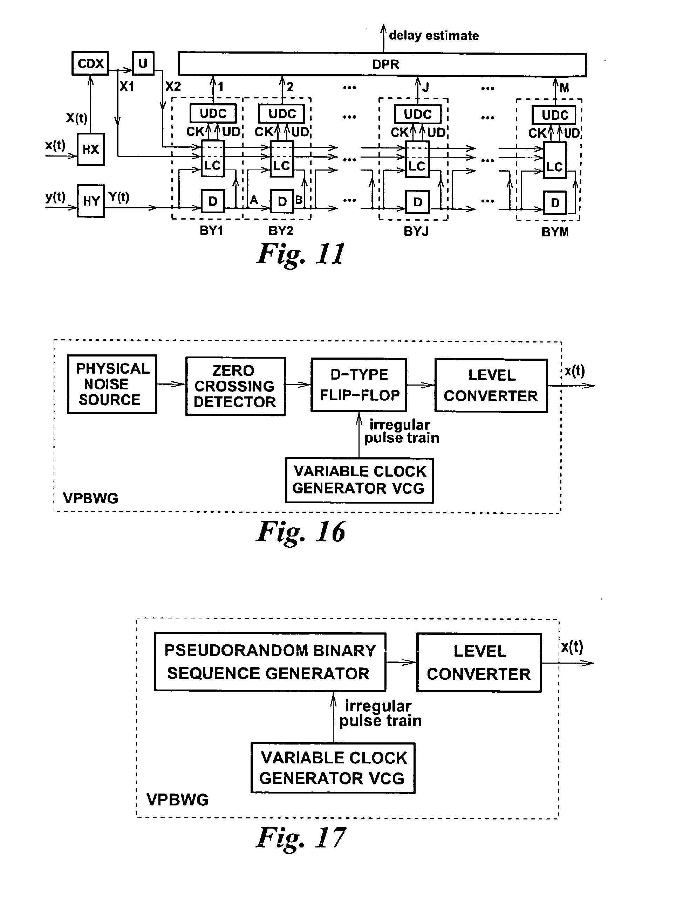

Fig. 10 is a block diagram of a suitably modified differential crosslator capable of determining the delay between a signal and its time-delayed replica. In this arrangement, there are no difference circuits, and the processor employs an auxiliary delay unit U and a pulse combiner S. When a rising edge (a zero upcrossing) is detected in a reference binary waveform x(t), a positive pulse is produced at the output of the zero-crossing detector ZCD. Because this pulse is delayed and inverted by the auxiliary delay unit U, the combiner S will produce a pulse doublet comprising a primary positive pulse followed shortly by its negative replica. Similarly, when a falling edge (a zero downcrossing) is detected in x(t), the negative pulse produced at the output of ZCD is delayed and inverted by the auxiliary delay unit U, so that the combiner S will produce a pulse doublet comprising a primary negative pulse followed shortly by its positive replica.

Accordingly, in response to detecting a single zero upcrossing, the bank of switches BS will transfer to the averaging circuits AVG a sampled representation of a binary waveform y(t) followed by a delayed and polarity-reversed replica of such representation. Similarly, when a zero downcrossing is detected, the bank of switches BS will transfer to the averaging circuits AVG a polarity-reversed sampled representation of a binary waveform y(t) followed by a delayed (and not polarity-reversed) replica of such representation. As a result, the array of averaging circuits AVG will produce directly the difference between a crosslation function and its replica delayed by the amount introduced by the auxiliary delay unit U.

Other functions and operations performed by the modified processor are equivalent to those of the processor of Fig. 8.

The differential crosslator shown in Fig. 10 can offer the following specific advantages:

- no difference circuits are required;
- the delay introduced by the auxiliary delay unit U may differ from the unit delay of delay cell D; accordingly, a better approximation of the derivative can be obtained for auxiliary delays less than that of cell D.

A suitably modified version of either of the two differential crosslators, shown in Fig. 8 and Fig. 10, may be employed instead of a correlator COR in the obstacle-detection system of Fig. 3 to provide improved time-delay (and distance) measurements. The circuits of Figs. 8 and 10 may operate using analog signals from the signal conditioning circuit SCU, or may operate using digital signals by incorporating an analog-to-digital converter in the conditioning circuit SCU and using suitable digital delay circuits D.

European patent application No. 04252786.1, filed 13 May 2004 (corresponding to US Patent Application Serial No. 11/127165, filed 12 May 2005, and referred to herein as "the second earlier application") discloses a method according to which all functions and operations performed in a differential crosslator by switches, zero-crossing detector, averaging circuits and difference circuits are implemented in a digital fashion.

Fig. 11 is a block diagram of a differential crosslator disclosed in the second earlier application and capable of determining the delay between two binary bipolar waveforms x(t) and y(t). The system comprises two hard limiters, HX and HY, a data processor DPR, an array of identical logic blocks {BY1, BY2, ... , BYM} a constant delay line CDX followed by a single delay unit U. Each logic block consists of a delay unit D, connected to a logic cell LC that drives a reversible (up/down) binary counter UDC. All delay units within the array form jointly a multi-tap delay cascade; each logic cell LC within the array receives two signals from its own respective delay unit D and another two signals X1 and X2 from the delay unit U.

The operation of the differential crosslator of Fig. 11 can be summarised as follows:

- A binary waveform X(t), defined by zero-crossings of the signals x(t), is suitably delayed by the constant delay line CDX followed by the delay unit U which produces two mutually delayed logic signals X1 and X2;

- A binary waveform Y(t), defined by zero-crossings of the signals y(t), propagates along the delay cascade, and each delay unit D of the cascade supplies two mutually delayed logic signals appearing at its input and output, respectively;

- Each logic cell LC combines logic information received from outputs X1 and X2 of the delay unit U, with the logic states of the input and output of its own delay unit D to make the following decisions:

  1. a state transition occurring in its own delay unit D has coincided with that occurring in the delay unit U;
  2. the coinciding transitions have been either *concordant* (i.e., of the same type, both up or both down), or *discordant* (i.e., of the opposite type);

- A reversible counter UDC in each logic cell LC 'counts up', if a concordant coincidence has been declared, and the UDC 'counts down', if a discordant coincidence has been declared.

- All the counters UDC are cleared at the beginning of a measurement cycle, initiated by an external control unit (not shown), and the contents of the counters are transferred to the data processor DPR when the measurement cycle is terminated.

- The functions and operations performed by the data processor DPR are equivalent to those performed by data processors used by the systems of Fig. 8 and Fig. 10.

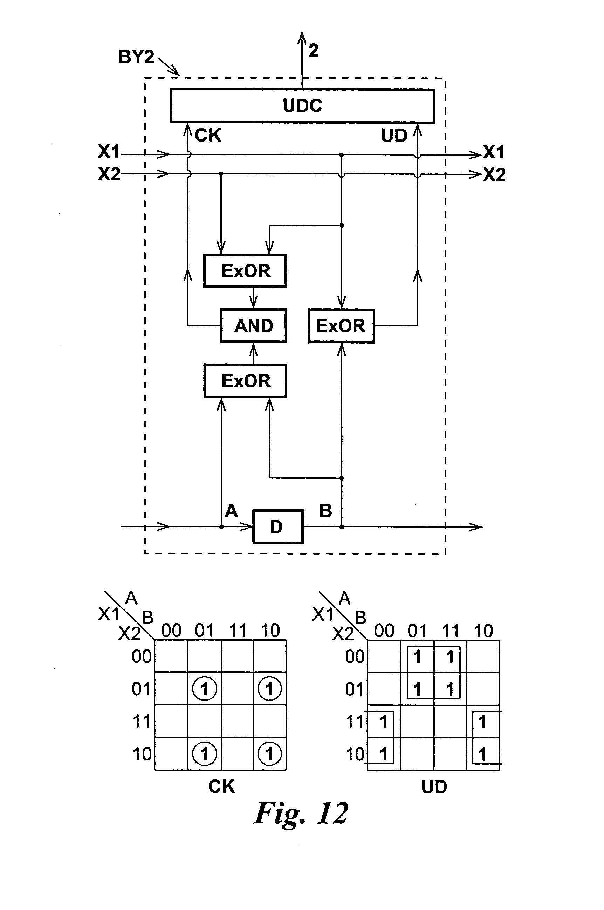

For illustrative purposes, Fig. 12 depicts an example of a possible structure of one of M identical logic blocks LC; in this case, logic block BY2. All input variables: A, B, X1, and X2 are logic variables, 0 or 1, corresponding to the two levels of a binary waveform. The reversible counter UDC counts up, when a pulse appears at input CK and UD = 1; if UD = 0, the counter counts down when a pulse occurs at input CK. Other functionally equivalent implementations of the logic block will be obvious to those skilled in the art.

The digital differential crosslator depicted in Fig. 11 may be incorporated into the obstacle-detection system of Fig. 3 to replace the correlator COR and provide improved time-delay (and distance) measurements.

Although the differential crosslator discussed above has a parallel structure, the second earlier application also discloses a serial differential crosslator constructed using logic circuits.

There are known advantages in transmitting random binary signals for the purpose of object detection. It is possible to obtain good energy efficiency particularly when transmitting using an appropriately modulated continuous wave transmission. By selecting the signal states using a pseudo-random generator, so that the binary signal has a sharp auto-correlation function, rapid convergence is possible.

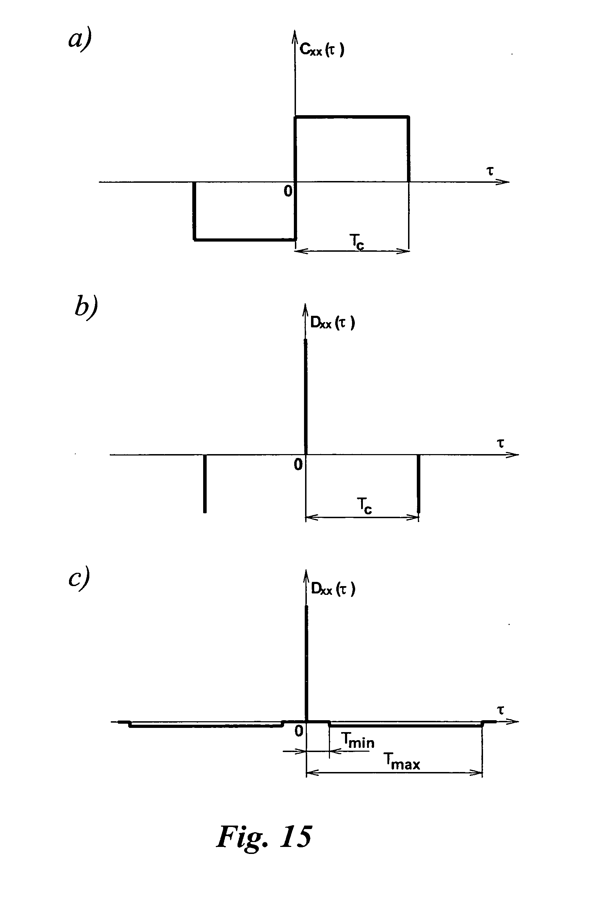

When a synchronous random binary signal is used, the crosslation function $C_{xx}(\tau)$ would, ideally, take the form shown in Fig. 15a. This is similar in form to the function of Fig. 7a, but assumes a discrete level for each clock period of the binary waveform. The function corresponds to the average level of segments of the waveform Y(t) staggered by the intervals between the transitions in the signal X(t) (which may only occur when a clock pulse is generated). Thus, where the delay value is such that the two waveforms coincide, all the positive-going transitions in the waveform Y(t) align. Accordingly, the crosslation function exhibits a negative value followed by an equal positive value. (The negative-going transitions also coincide, but because the corresponding samples are subtracted, these have the same effect on the crosslation function as the positive-going transitions.) Outside the delay interval corresponding to these two clock periods, for uncorrelated binary states, the crosslation function will average to zero.

The differential crosslation function $D_{xx}(\tau)$ has the form shown in Fig. 15b. This function can be generated directly, as it is for example in the circuit of Fig. 11, because the counters UDC count the transitions in the waveform Y(t). Positive-going transitions in the signal X(t) will cause simultaneous positive-going transitions in the signal Y(t) to increment the counter UDC, and simultaneous negative-going transitions in the signal Y(t) to decrement the counter UDC. The counter will therefore adopt a value corresponding to the average time derivative of the Y(t) signal at the times of the positive-going transitions in the X(t) signal. Negative-going transitions in the X(t) signal have the opposite effect, so the average time derivative of the Y(t) signal at the times of the negative-going transitions in the X(t) signal will be subtracted from the count value.

Irrespective of how it is generated, the differential crosslation function $D_{xx}(\tau)$ will have a large positive value (corresponding to the coincident concordant transitions, both positive-going and negative-going) at a delay value at which the waveforms X(t) and Y(t) coincide. This is preceded and followed by negative excursions, each separated from the positive peak by a delay corresponding to a single clock period of the binary waveform. Each negative excursion, or sidelobe, occurs because a positive-going (for example) transition of the waveform Y(t) can be preceded and followed (at a one clock period delay) only by a negative-going transition (or no transition). Therefore, with a one clock period delay between the waveforms, positive-going transitions of the X(t) waveform will coincide with negative-going transitions of the Y(t) waveform, and *vice versa.* These discordant transitions cause the negative excursions in Fig. 15b. The negative excursions are only about half the height of the central positive excursion because, with a one clock period delay, transitions in the X(t) waveform will coincide with discordant transitions in the Y(t) waveform or no transitions in the Y(t) waveform with substantially equal likelihood (assuming the binary states are chosen randomly).

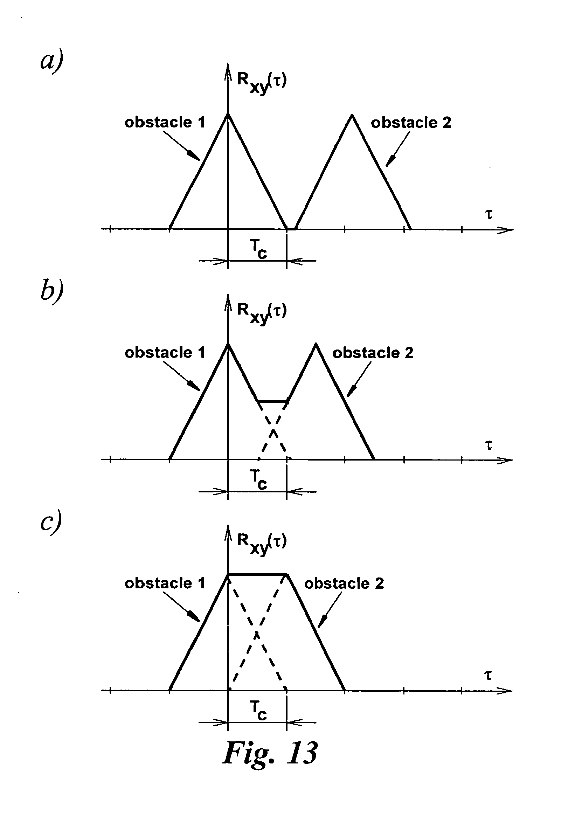

In general, correlation-based signal processing is not capable of resolving two obstacles if the distance between them is less than $c(T_c/2)$, where c is the speed of light, and $T_c$ is the clock period used for generating binary waveforms employed for obstacle detection. Fig. 13 shows examples of the output signal $R_{xy}(\tau)$ of a correlator for three different distances between two identical obstacles. As seen in Fig. 13c, even in this ideal case (no noise, no bandwidth limitation and infinite observation time), the two distinct correlation peaks merge into a single one for two closely-spaced obstacles.

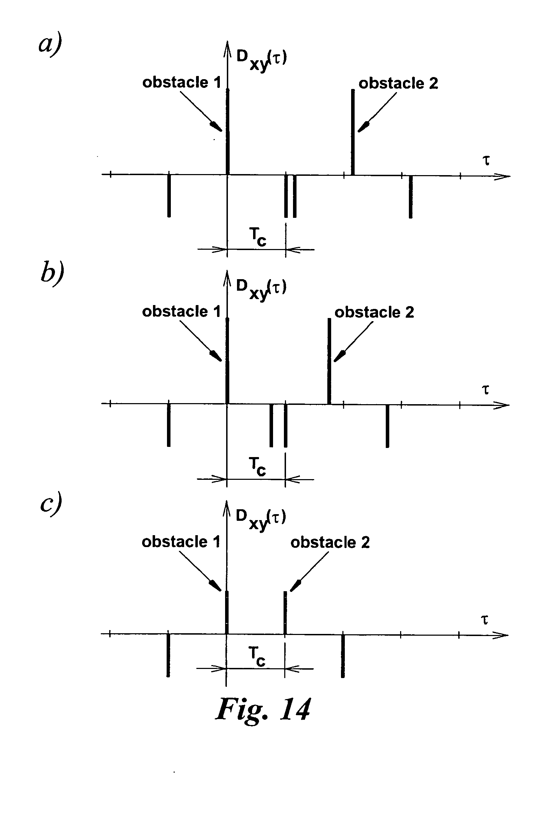

When differential crosslation is exploited in this ideal case, the two obstacles can be resolved irrespective of their distance, in the case of infinite bandwidth and absence of noise. Fig. 14 shows examples of the output signal $D_{xy}(\tau)$ of a differential crosslator which receives a synchronous binary signal for three different distances between two identical obstacles. Although in the situation depicted in Fig. 14c, the two positive peaks are clearly visible, both the peaks have been significantly attenuated by the effects of the negative excursions. Accordingly, for closely-spaced obstacles, this effect may lead to a total suppression of a smaller obstacle present in the vicinity of a larger one. However, it should be pointed out that the above undesirable effects of attenuation and suppression occur only in the case of closely-spaced obstacles.

Accordingly, it would be desirable to provide an improved high-resolution technique for time-delay and distance measurement, for example for application in obstacle-detection system operating in multiple-obstacle and multi-user environment.

## SUMMARY OF THE INVENTION

Aspects of the present invention are set out in the accompanying claims.

In accordance with a preferred aspect of the invention, an obstacle-detection system employs a differential crosslator to process random or pseudorandom binary waveforms so constructed as to significantly reduce attenuation of signals indicating closely-spaced obstacles, while providing high range resolution. This is accomplished by spreading the 'mass' of each of the two negative impulses, appearing in the differential crosslation function, between some specified minimum and maximum values, $T_{min}$ and $T_{max}$.

Fig. 15a illustrates schematically the crosslation function $C_{xx}(\tau)$ of a synchronous random binary waveform, Fig. 15b illustrates the corresponding differential crosslation function $D_{xx}(\tau)$ and Fig. 15c depicts the shape of a differential crosslation function optimised, in accordance with a preferred embodiment of the invention, for resolving closely-spaced obstacles.

The required spreading effect can be achieved by suitably modulating the time interval between clock pulses used by a circuit generating a bipolar synchronous binary waveform (e.g., such as the circuit shown in Fig. 1c). As a result of such inter-pulse interval modulation, the two values, $T_{min}$ and $T_{max}$, will represent, respectively, the shortest and the longest time intervals between clock pulses.

Preferably, the 'mass' of each of the two negative impulses, appearing in the differential crosslation function, will be spread uniformly between the predetermined minimum value $T_{min}$ and the predetermined maximum value $T_{max}$.

Although the required spreading effect can be achieved by employing a purely deterministic modulating waveform, such as a triangular wave, in a multi-user application of pseudorandom binary signals it is advantageous to utilize modulating mechanisms that include elements of randomness, irregularity or unpredictability.

## BRIEF DESCRIPTION OF THE DRAWINGS

Arrangements embodying the present invention will now be described by way of example with reference to the accompanying drawings.

Fig. 1a illustrates schematically a synchronous random binary waveform, Fig. 1b depicts the shape of the autocorrelation function optimal for ranging applications and Fig. 1c is a block diagram of a conventional circuit used to generate a bipolar synchronous random binary waveform.

Fig. 2 is an example of the autocorrelation function of a periodic pseudorandom binary waveform.

Fig. 3 is a block diagram of a conventional microwave obstacle-detection system.

Fig. 4 is a block diagram of a conventional cross-correlator system.

Fig. 5 shows an example of an empirical crosslation function obtained experimentally.

Fig. 6 is a block diagram of a system utilizing crosslation for determining the time delay.

Fig. 7 depicts: (a) a theoretical crosslation function; (b) and (c), at different scales, the difference between the crosslation function of (a) and its replica shifted by 0.001 of the time unit.

Fig. 8 is a block diagram of a differential crosslator.

Fig. 9a is an example of a discrete representation of an empirical crosslation function and Fig. 9b shows an empirical differential crosslation function.

Fig. 10 is a block diagram of a modified differential crosslator.

Fig. 11 is a block diagram of a differential crosslator constructed using logic circuits.

Fig. 12 depicts an example of a possible structure of a logic block used by the differential crosslator of Fig. 11.

Fig. 13 shows examples of the output signal of a correlator for three different distances between two identical closely-spaced obstacles.

Fig. 14 shows examples of the output signal of a differential crosslator for three different distances between two identical closely-spaced obstacles.

Fig. 15a illustrates schematically the crosslation function of a synchronous random binary waveform, Fig. 15b illustrates the corresponding differential crosslation function and Fig. 15c depicts the shape of a differential crosslation function optimised for resolving closely-spaced obstacles.

Fig. 16 is a block diagram of a system for generating random binary waveforms in apparatus in accordance with the present invention.

Fig. 17 is a block diagram of a system for generating pseudorandom binary waveforms in apparatus in accordance with the present invention.

Fig. 18a is a block diagram of a generator capable of producing clock pulses with a substantially uniform distribution of inter-pulse interval and Fig. 18b shows a hyperbolic frequency transfer function of a bandpass filter.

Fig. 19 is a block diagram of a conventional variable clock generator.

Fig. 20 is a block diagram of a variable clock generator better suited for use in apparatus in accordance with the present invention.

Fig. 21 is an example of an 8x8 input-output connection matrix based on a pattern of '8 non-attacking Queens'.

Fig. 22 shows an example of a $10 \times 8$ input-output connection matrix with 'deselected' columns 1 and 10.

Fig. 23 shows the shape of the autocorrelation function of a random binary waveform with the clock period modulated in accordance with the present invention.

Fig. 24 is a block diagram of a system combining operations of a correlator and a differential crosslator arranged in accordance with the present invention.

Fig. 25 is a block diagram of a microwave obstacle-detection system in accordance with the present invention.

## DETAILED DESCRIPTION OF THE PREFERRED EMBODIMENTS

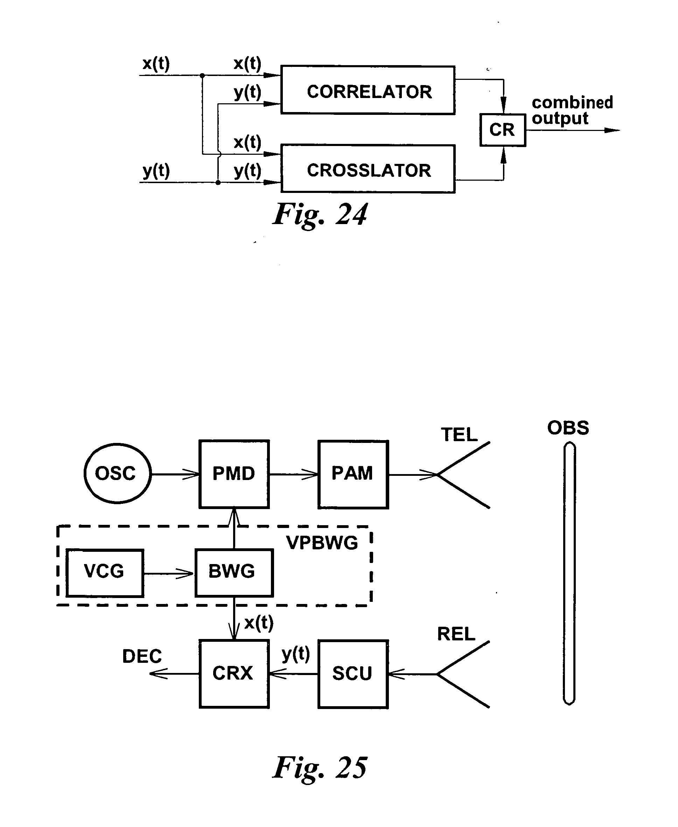

Fig. 25 shows a microwave obstacle-detection system in accordance with the present invention. Most of the system is similar to that of Fig. 3, and like references denote like integers. The system differs in the use of a differential crosslator CRX, which may be one of the arrangements shown in Figs. 8, 10 and 11, in place of the correlator COR of Fig. 3, and the use of a variable period binary waveform generator VPBWG which includes a variable clock generator VCG in place of the clock generator CKG of Fig. 3.

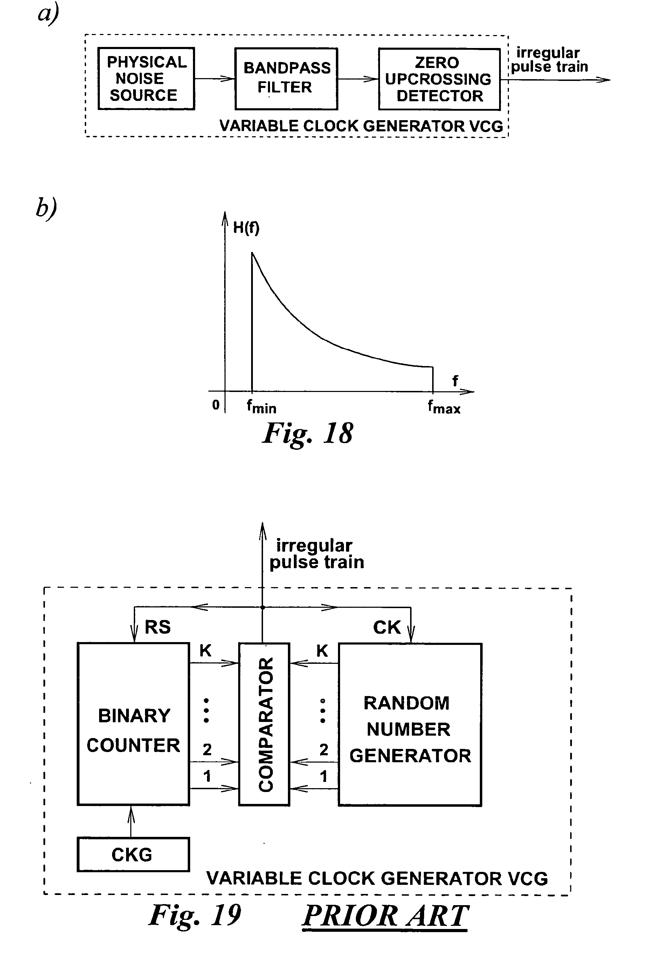

Fig. 16 is a block diagram of a system for generating random binary waveforms for use as the variable period binary waveform generator VPBWG in an object detection system in accordance with the invention. Instead of a standard clock generator used by a conventional circuit, such as that shown in Fig. 1c, the system employs a variable clock generator VCG. The variable clock generator supplies a train of clock pulses with specified statistical characteristics. Although clock pulses may be generated in a purely random or non-random, preferably irregular, fashion, the inter-pulse time interval should preferably have a specified statistical distribution within the range ($T_{min}$, $T_{max}$), where $T_{min}$ and $T_{max}$ are, respectively, the shortest and the longest time intervals between clock pulses.

Fig. 17 is a block diagram of an alternative generator VPBWG for generating pseudorandom binary waveforms for use in an object detection system in accordance with the invention. Also in this case, instead of a standard clock generator used by a conventional circuit, the system employs a variable clock generator VCG that produces an irregular pulse train with specified statistical characteristics. The output of the variable clock generator is used to cause a pseudorandom binary sequence generator to switch to its next state. The output of the pseudorandom binary sequence generator may then be subjected to level conversion.

If either of the waveform generators of Figs. 16 and 17 is used, the 'mass' of each of the two negative impulses, appearing in the differential crosslation function $D_{xx}(\tau)$, shown in Fig. 15b, will be spread evenly between the minimum and maximum values, $T_{min}$ and $T_{max}$, if the time interval between consecutive clock pulses has a uniform distribution over the range $(T_{min}, T_{max})$. As a result, the differential crosslation function $D_{xx}(\tau)$ will have the desired shape shown in Fig. 15c.

Fig. 19 is a block diagram of a variable period clock generator VCG, known per *se* in the prior art, which could be used as the clock generator for the circuit of Fig. 16 or 17. The circuit of Fig. 19 is capable of producing clock pulses with a substantially uniform distribution of inter-pulse interval. The generator comprises a K-bit binary counter, a suitable constant-period clock generator CKG, a comparator and a random number generator.

The variable clock generator operates as follows:

- At the start of each interval, the random number generator supplies a K-bit non-negative random value RN, and the K-bit binary counter is 'counting up' clock pulses obtained from the clock generator CKG. The initial state of the counter is set to some negative value -NV corresponding to the shortest inter-pulse interval $T_{min} = (NV)T_c$ of the irregular output pulses, where $T_c$ is the period of clock pulses supplied by the CKG. The longest inter-pulse interval $T_{max}$ can be determined from $T_{max} = T_{min} + (2^K-1)T_c$. Accordingly, the inter-pulse interval of the irregular output pulses is $(T_{ave} + VO)$, wherein $T_{ave} = (T_{min} + T_{max})/2$ represents a notional regular output clock pulse period and VO is a varying time offset which can have both positive and negative values.
- When the state of the counter reaches the non-negative K-bit value RN, the comparator produces a suitable pulse used to form an output clock pulse and also to:

    - set the counter via input RS to its initial state -NV;
    - trigger the random number generator via input CK which results in a new K-bit random value RN being produced.

- If K-bit numbers produced by the random number generator are distributed uniformly, then the distribution of the time interval between consecutive pulses produced by the comparator will also be uniform. Accordingly, those pulses will form an irregular pulse train utilized by systems shown in Fig. 16 and Fig. 17.

A random number generator suitable for the above application can be constructed by the skilled man. A suitable example has been disclosed in U.S. Patent No. 6,751,639, the contents of which are incorporated herein by reference.

Example

Assume that K = 6, -NV = -4 and $T_c$ = 5 ns. Therefore, $T_{min} = (NV)T_c$ = 20 ns, whereas $T_{max} = T_{min} + (2^K-1)T_c$ = 215 ns.

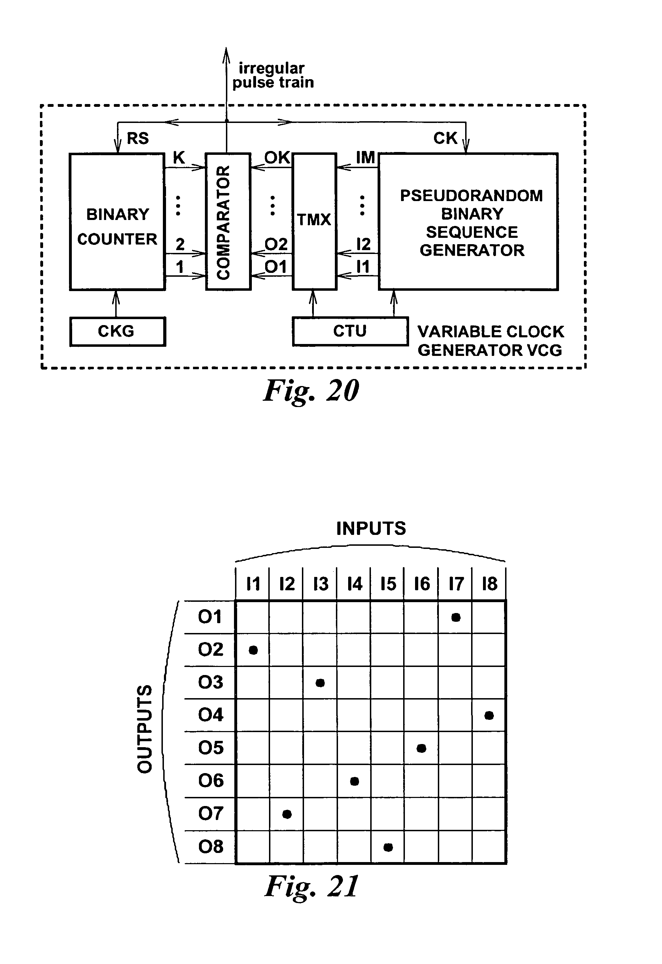

Fig. 20 is a block diagram of a different variable clock generator VCG which can be used in the arrangements of Figs. 16 and 17. The generator produces clock pulses with, by design, uniform distribution of inter-pulse interval in such a way that during each measurement cycle each interval value occurs exactly the same number of times as any other value. However, during each measurement cycle, all the values may appear in different order due to a permutation mechanism incorporated into the design. The generator comprises a K-bit binary counter, a suitable clock generator CKG, a comparator, a control unit CTU, a pseudorandom binary sequence generator and a transition-matrix circuit TMX.

The variable clock generator of Fig. 20 operates functionally in a manner similar to that of the known generator of Fig. 19. However, the fundamental difference results from the collaboration of the control unit CTU, the pseudorandom binary sequence generator and the transition-matrix circuit TMX, which jointly replace the random number generator utilized by the clock generator of Fig. 19. Such an arrangement provides interval uniformity with maximal irregularity of interval values.

The pseudorandom binary sequence (PRBS) generator is a conventional M-cell shift register with linear feedback, well known to those skilled in the art. In its basic configuration, the PRBS generator supplies at its parallel outputs binary numbers from the range $(1, 2^M-1)$. In some cases, it may be advantageous to include the all-zero binary word, thus extending the range of produced numbers to $(0, 2^M-1)$. Modifications of a linear feedback needed to include the all-zero word are known to those skilled in the art.

Irrespective of the range span, each number from the allowable range appears exactly once during one full period of the PRBS generator, and the order of number appearance depends on the form of the linear feedback. A new number appears in response to a pulse applied to input CK.

In a general case, the transition-matrix circuit TMX has M inputs and K outputs, where $M \geq K$. However, in the simplest arrangement, M = K, and the TMX has K inputs, I1, I2, ... , IK and K outputs, O1, O2, ... , OK; hence the PRBS generator has K parallel outputs driving inputs I1, I2, ... , IK. The operation of the TMX can be explained by way of an example shown in Fig. 21. The pattern of K, K = 8, dots in a K×K matrix corresponds to input-output connections realized by the TMX. Therefore, in this case, O1 = I7, O2 = I1, ... , 07 = I2 and 08 = I5. Obviously, each column and each row of the matrix must contain exactly one dot.

The binary counter of Fig. 20 will count clock pulses until the count reached is found, by the comparator, to match the output of the transition-matrix circuit TMX (and consequently until the count bears a predetermined relationship with the number generated by the pseudorandom binary sequence generator, this relationship being defined by the pattern of the transition-matrix circuit TMX).

Although many different dot patterns can be devised for this application, it may be advantageous to utilize a dot pattern belonging to a class of patterns referred to as 'K non-attacking Queens', such as the dot pattern shown in Fig. 21. Also, other well-known designs, such as Costas arrays, may prove very useful in some specific applications.

In the illustrated arrangement, a different dot pattern may be used for different periods of the PRBS generator. A particular dot pattern may be periodically selected from a predetermined set of patterns in a deterministic or non-deterministic fashion, thus altering the predetermined relationship detected by the comparator between the count value and the random number. The pattern selection task is carried out by the control unit CTU.

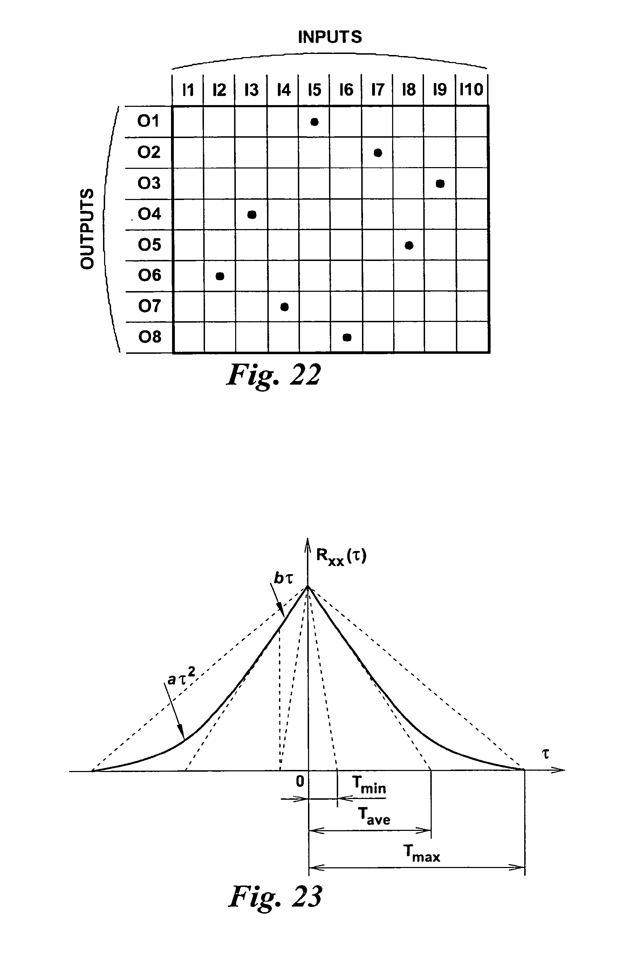

Fig. 22 shows an example of input-output connections when M > K, with M = 10 and K = 8. In this case, it is assumed that the PRBS generator supplies all values from 0 to 1023, and hence one complete period comprises 1024 values. During that period, outputs O1, O2, ... , O8 will supply all numbers from 0 to 256 exactly four times, yet with a form of irregularity different from that provided by a single 8x8 matrix.

Also in this case, a different dot pattern may be used for different periods of the PRBS generator. A particular dot pattern can be selected from a predetermined set of patterns in a deterministic or non-deterministic fashion. The pattern selection task is carried out by the control unit CTU. Additionally, the control unit CTU will 'deselect' (M-K) inputs from the M inputs in a deterministic or non-deterministic fashion thus enhancing the irregularity of produced numbers (hence, time intervals).

In addition to permutations obtained from changing the input-output connection matrix in the TMX, the form of feedback used by the PRBS generator may also be varied. A particular feedback function can be selected from a predetermined set of functions in a deterministic or non-deterministic fashion. The feedback selection task is also carried out by the control unit CTU.

Some or all of the above permutation mechanisms can be combined in order to increase the irregularity of numbers (thus time intervals) produced by the joint operation of the control unit CTU, the PRBS generator and the transition-matrix circuit TMX.

In the above arrangement, the PBRS generator is arranged so that each generated random number appears as often as all other generated numbers, thus ensuring a uniform distribution of clock periods within a specified range. In an alternative arrangement, the uniform distribution of clock periods is achieved without requiring such a structure of the PBRS generator, by repeatedly changing the pattern of the transition-matrix circuit TMX so that each input is linked to each output for substantially equal number of number-generating operations.

Fig. 18a is a block diagram of a still further circuit which could alternatively be used as the variable clock generator of the variable period binary waveform generator VPBWG. In Fig. 18, an irregular pulse-train generator, known *per se* from the prior art, is capable of producing clock pulses with substantially uniform distribution of inter-pulse interval. The principle of operation of the system is based on the fact that for a sine wave, a uniform period distribution corresponds to a hyperbolic distribution of the sine wave frequency. The system, disclosed in U.S. Patent No. 3,304,515, employs a wideband physical noise source followed by a spectrum shaping bandpass filter with a hyperbolic frequency transfer function H(f), shown in Fig. 18b. In this case, the lowest frequency $f_{min}=1/T_{max}$, whereas $f_{max}=1/T_{min}$. The contents of U.S. Patent No. 3,304,515 are incorporated herein by reference.

Uniform modulation of the clock period used in systems in accordance with the present invention also modifies the shape of the autocorrelation function of a resulting random (and pseudorandom) binary waveform. The basic triangular shape, shown in Fig. 1 b, will be converted into the shape depicted in Fig. 23. This new shape comprises the following elements:

- a linear (triangular) part $b\tau$, for $|\tau| < T_{min}$, with the slope $b = R_{xx}(0)/T_{ave}$, where $T_{ave} = (T_{min} + T_{max})/2$;
- a quadratic (parabolic) part $\alpha\tau^2$, for $T_{min} < |\tau| < T_{max}$, with the coefficient $\alpha$ so selected that the two parts (linear and quadratic) form a correlation curve with a smooth transition at $|\tau| = T min$.

In a modified version of the invention, a conventional correlator is combined with a differential crosslator to provide improved time-delay measurements. Fig. 24 is a block diagram of a two-channel system comprising a correlator and a differential crosslator (which may be of one of the types shown in Figs. 8, 10 and 11), which are used, together with a combiner CR, in place of the differential correlator CRX of Fig. 25. Both the correlator and the differential crosslator receive the reference signal x(t) and a signal y(t) which is a delayed (reflected) version of the reference input signal x(t).

The outputs of the correlator and differential crosslator are delivered to the combiner CR which may, for example, be a multiplier. In such a case, the combined output will be the product of two functions: a correlation function $R_{xx}(\tau)$ with the shape shown in Fig. 23, and a differential crosslation function $D_{xx}(\tau)$ with the shape as shown in Fig. 15c. Therefore, the resulting function, $[R_{xx}(\tau) D_{xx}(\tau)]$, obtained at the combined output will have reduced off-peak values. The use of such arrangement will be especially advantageous in systems which already employ a correlator for various signal processing tasks.

The foregoing description of preferred embodiments of the invention has been presented for the purpose of illustration and description. It is not intended to be exhaustive or to limit the invention to the precise form disclosed. In light of the foregoing description, it is evident that many alterations, modifications, and variations will enable those skilled in the art to utilize the invention in various embodiments suited to the particular use contemplated.

For example, if desired, the differential crosslator may be arranged to determine whether an object is present only at a particular range, corresponding to a certain delay applied to one of the signals x(t) and y(t). Means may be provided for varying this delay, to enable use of the apparatus for other ranges.

The differential crosslator preferably uses events corresponding to both positive-going and negative-going transitions in the binary signal for sampling purposes, as in the arrangements of Figs. 8, 10 and 11, but this is not essential.

In the arrangements described above, the reference signal x(t) is used to sample the reflected signal y(t) in order to measure the delay between the signals. Instead, the reflected signal y(t) could be used to sample the reference signal x(t). However, it is unlikely this would be beneficial, particularly if there is significant noise in the received signal, and/or if multiple objects are present within the range of the apparatus.

The configuration of the logic circuit-based differential crosslator shown in Fig. 11 could be modified. In the illustrated arrangement, in each logic cell LC, each transition in the reference signal x(t) is used to sample the signal y(t) at two successive points (separated by the delay caused by delay unit D). A value dependent on the difference between the samples is fed to the counter UDC. Thus, the counter UDC accumulates a value dependent on the time derivative of the signal y(t). The operation is analogous to that of the differential crosslator of Fig. 10. (If desired, more than two samples of the signal y(t) could be taken to obtain a more accurate representation of the time derivative, although this is currently regarded as unnecessary.)

An alternative embodiment may have logic cells in which each transition of the signal x(t) causes the current value of the signal y(t) to be fed to an averager. The averagers then will collectively develop a representation corresponding to the crosslation function $C_{xx}(\tau)$ of Fig. 15a. This representation could then be differentiated with respect to the delay value (for example by extracting the differences between successive averagers, analogously to the arrangement of Fig. 8) to obtain the differential crosslation function. Thus, averaging the sample values and differentiating with respect to the delay value produces a similar result to that obtained by the illustrated Fig. 11 arrangement, in which the sampled time derivative is averaged.

In the described arrangements, the transmitted binary signal has a random sequence of states. Instead, the sequence of states may be selected in a non-random manner, although it should form an irregular pattern, at least throughout a period of interest.

The distribution of intervals between the clock pulses generated by the variable clock generator is preferably both uniform and random, though neither of these is essential.

The term "random" is intended herein to include, where context permits and without limitation, not only purely random, non-deterministically generated signals, but also pseudo-random and/or deterministic signals such as the output of a shift register arrangement provided with a feedback circuit as used in the prior art to generate pseudo-random binary signals, and chaotic signals.

The invention is particularly useful when applied to systems in which the transmitted binary signal is a continuous wave signal, and also to systems in which the signal is modulated in such a way (e.g. by phase modulation) that it has a substantially constant envelope. These properties enable an efficient and effective object detection system.

As suggested above, the present invention is applicable to systems for detecting the presence of objects, such as obstacles, at unknown positions and/or ranges relative to an observer. The invention is also applicable to position-determining systems which detect the relative location and/or bearing of objects at known positions.

**Claims**

1. A method for detecting an object, the method comprising the steps of:

   (a) generating a binary signal having an irregular sequence of states and in which transitions between states occur at varying time offsets with respect to notional regular clock pulses;
   (b) deriving first and second signals from the binary signal, one of the first and second signals comprising a reference signal and the other comprising a received signal formed by reflection of a transmitted version of the binary signal;
   (c) introducing a delay between the first and second signals;
   (d) using the first signal to sample the second signal and combining the samples so as to derive a combined value representing the average time derivative of the second signal at the times of the transitions in the first signal; and
   (e) determining, in dependence on said combined value, whether an object is located at a range corresponding to said delay.

**2.** A method as claimed in claim 1, wherein the time offsets are spread between predetermined minimum and maximum values.

**3.** A method as claimed in claim 2, wherein the time offsets are distributed substantially uniformly between the predetermined minimum and maximum values.

**4.** A method as claimed in any preceding claim, wherein the time offsets are random.

**5.** A method as claimed in any preceding claim, the method comprising generating a variable period clock signal for controlling the timing of the state transitions of said binary signal, wherein the intervals between clock pulses of the variable period clock signal are each determined by generating a random number and counting regular clock pulses until a count value bears a predetermined relationship with the random number.

**6.** A method as claimed in claim 5, including the step of repeatedly altering said predetermined relationship.

**7.** A method as claimed in any preceding claim, wherein the first signal is the reference signal and the second signal is the received signal.

**8.** A method as claimed in any preceding claim, further comprising:

repeating steps (c) and (d) for different values of said delay and thereby obtaining a plurality of combined values each associated with a respective delay.

**9.** A method as claimed in any preceding claim, wherein, in step (d), a plurality of samples of the second signal are obtained for each transition in the first signal so as to derive a result representing the time derivative of the second signal, said combined value being obtained by combining the results for the respective transitions.

**10.** A method as claimed in any one of claims 1 to 8, wherein, in step (d), the second signal is sampled at the time of each transition in the first signal, the samples for respective transitions are combined to obtain a result, and the results obtained for respective different delay values are subjected to differentiation with respect to the delay value to obtain the combined value representing the average time derivative of the second signal.

**11.** A method as claimed in claim 10, wherein the result for each delay value is subtracted from the result for a different delay value to obtain the combined value representing the average time derivative of the second signal.

**12.** A method as claimed in any preceding claim, including the step of transmitting the binary signal as a continuous wave signal.

**13.** A method as claimed in claim 12, wherein the transmitted binary signal has a substantially constant envelope.

**14.** A method as claimed in any preceding claim, wherein the binary sequence is random.

**15.** A method as claimed in any preceding claim, wherein the transitions in said first signal comprise positive-going transitions and negative-going transitions, and wherein step (d) comprises combining the samples in such a manner that the combined value represents the difference between the average time derivative of the second signal at locations substantially corresponding to the positive-going transitions and the average time derivative of the second signal at locations substantially corresponding to the negative-going transitions.

**16.** Apparatus arranged to perform a method as claimed in any preceding claim.

a)

bipolar synchronous random binary waveform

b)

c)

**Fig. 1**          **PRIOR ART**

$R_{xx}(\tau)$

$0$

$T_c$

*Fig. 2*  **PRIOR ART**

OSC → PMD → PAM → TEL

CKG → BWG

BWG → PMD

BWG → x(t)

OBS

DEC ← COR ← y(t) ← SCU ← REL

*Fig. 3*  **PRIOR ART**

y(t) → PF → MXY → FINITE TIME INTEGRATOR

τ

x(t) → VARIABLE DELAY LINE

PEAK DETECTOR

**Fig. 4**    **_PRIOR ART_**

crosslation function

**Fig. 5**    **_PRIOR ART_**

**Fig. 6**     **_PRIOR ART_**

**Fig. 8**

**Fig. 10**

*a)*

**crosslation function** $C_{xx}(\tau)$

*b)*

**differential crosslation function**

*c)*

**differential crosslation function**

*Fig. 7*

a)

b)

Fig. 9

**Fig. 11**

**Fig. 16**

**Fig. 17**

*Fig. 12*

Fig. 13

*Fig. 14*

a)

b)

c)

*Fig. 15*

*a)*

PHYSICAL NOISE SOURCE → BANDPASS FILTER → ZERO UPCROSSING DETECTOR → **irregular pulse train**

VARIABLE CLOCK GENERATOR VCG

*b)*

$H(f)$

$0$  $f_{min}$  $f_{max}$  $f$

**Fig. 18**

**irregular pulse train**

RS | BINARY COUNTER — K, ⋮, 2, 1 → COMPARATOR ← K, ⋮, 2, 1 — RANDOM NUMBER GENERATOR | CK

CKG

VARIABLE CLOCK GENERATOR VCG

**Fig. 19**  **_PRIOR ART_**

**Fig. 20**

**Fig. 21**

**INPUTS**

|    | I1 | I2 | I3 | I4 | I5 | I6 | I7 | I8 | I9 | I10 |
|----|----|----|----|----|----|----|----|----|----|-----|
| O1 |    |    |    |    | ● |    |    |    |    |     |
| O2 |    |    |    |    |    |    | ● |    |    |     |
| O3 |    |    |    |    |    |    |    |    | ● |     |
| O4 |    |    | ● |    |    |    |    |    |    |     |
| O5 |    |    |    |    |    |    |    | ● |    |     |
| O6 |    | ● |    |    |    |    |    |    |    |     |
| O7 |    |    |    | ● |    |    |    |    |    |     |
| O8 |    |    |    |    |    | ● |    |    |    |     |

**OUTPUTS**

*Fig. 22*

*Fig. 23*

Fig. 24

Fig. 25

**European Patent Office**

**EUROPEAN SEARCH REPORT**

Application Number

EP 05 25 6583

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | US 6 539 320 B1 (SZAJNOWSKI WIESLAW JERZY ET AL) 25 March 2003 (2003-03-25) * column 2, line 58 - column 3, line 37 * ----- | 1-16 | INV. G01S13/10 |
| D,A | US 6 751 639 B2 (SZAJNOWSKI W. J ET AL) 15 June 2004 (2004-06-15) * abstract * * paragraph [0003] - paragraph [0004] * ----- | 1-16 | |

TECHNICAL FIELDS SEARCHED (IPC)

G01S
H04B

The present search report has been drawn up for all claims

| Place of search | Date of completion of the search | Examiner |
|---|---|---|
| Munich | 10 July 2006 | Ó Donnabháin, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                      
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 25 6583

This annex lists the patent family members relating to the patent documents cited in  the above-mentioned European search report.
The members are as contained in the European Patent Office EDP file on
The European Patent Office is in no way liable for these particulars which are merely  given for the purpose of information.

10-07-2006

| Patent document cited in search report | | Publication date | Patent family member(s) | | Publication date |
|---|---|---|---|---|---|
| US 6539320 | B1 | 25-03-2003 | AU | 1882400 A | 31-07-2000 |
| | | | EP | 1145084 A1 | 17-10-2001 |
| | | | WO | 0039643 A1 | 06-07-2000 |
| | | | GB | 2345149 A | 28-06-2000 |
| | | | JP | 3706305 B2 | 12-10-2005 |
| | | | JP | 2002533732 T | 08-10-2002 |
| | | | JP | 2005249800 A | 15-09-2005 |
| US 6751639 | B2 | 15-06-2004 | DE | 10063240 A1 | 20-09-2001 |
| | | | GB | 2357610 A | 27-06-2001 |
| | | | JP | 2001229010 A | 24-08-2001 |
| | | | US | 2002035586 A1 | 21-03-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6539320 B
- EP 04252785 A
- US 12727105 A
- EP 04252786 A
- US 12716505 A
- US 6751639 B
- US 3304515 A

**Non-patent literature cited in the description**

- **W. J. SZAJNOWSKI ; P. A. RATLIFF.** Implicit Averaging and Delay Determination of Random Binary Waveforms. *IEEE Signal Processing Letters,* 2002, vol. 9, 193-195